# EUROPÄISCHE PATENTSCHRIFT

(11) **EP 2 161 375 B1**
(45) Veröffentlichungstag und Bekanntmachung des Hinweises auf die Patenterteilung: **12.05.2021**
(21) Anmeldenummer: 09011106.3
(22) Anmeldetag: 29.08.2009
(51) Int. Cl.: E01C 23/088, G01N 3/56

(54) **Verfahren zur Bestimmung des Verschleißzustandes**
Method for determining wear status
Procédé destiné à la détermination de l'état d'usure

(30) Priorität: 03.09.2008 DE 102008045470
(43) Veröffentlichungstag der Anmeldung: 10.03.2010
(73) Patentinhaber: Wirtgen GmbH, 53578 Windhagen (DE)
(72) Erfinder: Wagner, Stefan, 53604 Bad Honnef (DE); Barimani, Cyrus, 53639 Königswinter (DE); Hähn, Günter, 53639 Königswinter (DE)
(74) Vertreter: Herrmann, Jochen

(56) Entgegenhaltungen:
- DE-A1- 3 411 892
- US-A- 4 176 396
- US-A1- 2005 261 799

## Beschreibung

Beim Ausbau von Straßen mittels Fräsen sowie bei Abbau von Lagerstätten mittels Surfaceminer ebenfalls durch Fräsen unterliegen die eingesetzten Werkzeuge und dabei insbesondere die Fräsmeißel einem kontinuierlichen Verschleißprozess. Erreichen die Werkzeuge einen bestimmten Verschleißzustand, ist ein Austausch der Werkzeuge zweckmäßig, da sonst der weitere Prozess an Effizienz (Wirkungsgrad) verliert. Dabei müssen verschiedene Verschleißzustände unterschieden werden, die zum Austausch eines Fräsmeißels bzw. Meißelhalters führen:
1. Austausch des Meißels, da nicht mehr genügend Verschleißmaterial (insbesondere Hartmetall in der Spitze) vorhanden ist. Der Eindringwiderstand wird zu groß und damit nimmt der Wirkungsgrad ab (zuviel Reibungsverlust), der Verschleiß ist hauptsächlich rotationssymmetrisch.
2. Austausch des Meißelhalters, da die Verschleißgrenze erreicht ist (zwischen Meißel und Halter kommt es an der Kontaktfläche zu Verschleiß des Halters). Dieser Verschleiß ist üblicherweise symmetrisch.
3. Nicht rotationssymmetrischer Verschleiß der Meißelspitze und/oder des Meißelkopfes durch unzureichende Drehbewegung des Meißels während des Fräsprozesses. Die Folgen sind ein schlechtes Fräsbild sowie die Gefahr eines Werkzeugbruches, da die stützende Wirkung des Meißelkopfes verloren geht.
4. Der Meißelhalter kann darüber hinaus noch zusätzlichem, nicht rotationssymmetrischem Verschleiß unterliegen.
5. Meißelbruch.

Darüber hinaus kann es bei verschlissenen und/oder gebrochenen Meißeln zu Sekundärschäden an den Meißelhaltern beziehungsweise bei verschlissenen Meißelhaltern zu Sekundärschäden an der Fräswalze kommen. Ein rechtzeitiger Austausch der Meißel und/oder der Meißelhalter ist daher notwendig und spart Kosten. Werden die Meißel und/oder Meißelhalter hingegen zu früh gewechselt, wird ebenfalls nicht kostenoptimal gearbeitet, da die Meißel und Meißelhalter als Verschleißteil sehr kostenintensiv sind. Noch vorhandenes Verschleißpotential wird dann nicht richtig ausgenutzt. Bis dato wird der Verschleißzustand der Meißel und Meißelhalter durch visuelle Kontrolle des Maschinenfahrers beurteilt. Der Maschinenführer muss dazu die Maschine abstellen (Motor ausschalten und Walze vom Antriebsstrang entkoppeln). Er muss sodann die hintere Walzenklappe öffnen, um so die Fräswalze visuell zu inspizieren.

Die Fräswalze wird dann mittels eines zweiten Antriebes gedreht, um die komplette Fräswalze inspizieren zu können. Die Aufgabe der Walzeninspektion kann auch von einem zweiten Bedienmann übernommen werden. Der Verschleißzustand der Meißelhalter wird dabei üblicherweise über so genannte Verschleißmarkierungen beurteilt. Der Verschleißzustand der Meißel über Längenverschleiß und Rotationssymmetrie des Verschleißbildes.

Die Kontrolle des Verschleißzustandes von Meißel und Halter ist sehr zeitintensiv und da in dieser Zeit nicht produziert werden kann, unproduktiv. Der Gesamtprozess wird gestört und damit die Verfügbarkeit zusätzlich vermindert. Zudem besteht die Gefahr aufgrund der stark subjektiv geprägten Beurteilung, dass das Verschleißpotential von Halter und Meißel nicht optimal genutzt wird.

Aus der DE 102 03 732 A1 ist eine Vorrichtung bekannt, bei der durch Überwachung von Betriebszuständen von Maschinenbauteilen die direkt oder indirekt am Fräsprozess beteiligt sind, der Betrieb optimiert werden kann. So wird unter anderem auch der Verschleißzustand der Meißel durch Auswertung diverser Maschinenparameter und Kenngrößen beurteilt. Während des Betriebes der Fräsmaschine besteht das Problem, dass der Fräsprozess bzw. der von seinen Eigenschaften stark schwankende Untergrund selbst auf die Auswertung des Betriebszustandes von Bauteilen großen Einfluss hat. Aufgrund stark schwankender Eigenschaften des zu fräsenden Untergrundes ist eine Trennung zwischen wechselnden Betriebszuständen von am Fräsprozess direkt oder indirekt beteiligten Maschinenbauteilen aufgrund von wechselnden Bodeneigenschaften oder wechselnden Werkzeugeigenschaften nicht ohne Weiteres möglich.

Aus der AT 382 683 B ist eine Bergbaumaschine bekannt, bei der die Schrämwalze berührungslos überwacht wird. Dabei werden Lichtschranken verwendet, die die Anwesenheit der Meißel erkennen. Eine quantitative Verschleißsauwertung ist mit diesem Verfahren nicht möglich. US 2005/261799 A1 offenbart eine Baggerschaufel mit einem eimerförmigen Grundkörper. An einer vorderen Kante des Grundkörpers sind abstehende Zähne angebracht. Zwischen den einzelnen Zähnen werden Lücken gebildet. Zur Ermittlung des Längenverschleißes der Zähne wird eine optischen Messung durchgeführt. Dabei wird der Überstand der Zahnspitzen der Zähne über die Kante vermessen.

Es ist Aufgabe der Erfindung, ein Verfahren der eingangs erwähnten Art bereitzustellen, mit dem eine quantitative Verschleißerkennung durchführbar ist.

Diese Aufgabe wird dadurch gelöst, dass die Position zumindest eines Punktes (nachfolgend "Positionswert" genannt) des Fräswerkzeuges, insbesondere des Meißels und/oder des Meißelhalters mittels eines Meßverfahrens ermittelt wird, und dass dieses Messergebnis in einer Schalteinheit mit einem in einer Speichereinheit gespeicherten Referenzwert verglichen wird.

Erfindungsgemäß wird somit über den Vergleich des Positionswertes mit dem Referenzwert eine Bezugsgröße bestimmt, die eine quantitative Aussage über den Verschleiß des Fräswerkzeuges, insbesondere des Meißels und/oder des Meißelhalters beinhaltet. Damit kann dann eine Auswertung des Verschleißgrades vorgenommen werden, die dem Benutzer eine Entscheidungshilfe gibt. Dementsprechend kann er entscheiden, ob ein Werkzeugwechsel vorgenommen werden muss, oder ob der Verschleißzustand eine anstehende Fräsaufgabe zulässt. Auf diese Weise kann eine deutliche Wirkungsgradverbesserung erreicht werden.

Der Referenzwert kann ein a priori bekannter beziehungsweise ein ermittelter und abgespeicherter Wert, oder ein Kennfeld, oder ein funktioneller Zusammenhang sein, mit dem ein oder mehrere Positionswerte beziehungsweise Verrechnungen von diesen verglichen werden.

Gemäß einer möglichen Erfindungsausgestaltung kann es vorgesehen sein, dass als Positionswert die Position der Meißelspitze erfasst wird.

Im einfachsten Fall wird die Position der Meißelspitze relativ zum Drehpunkt der Fräswalze gemessen und mit einem zum Beispiel im Neuzustand von Halter und Meißel ermittelten Referenzwert verglichen. Daraus ergibt sich direkt der Längenverschleiß von Meißel und Halter. Bei Erreichung einer gewissen Grenzverschleißlänge wird der Meißel gewechselt.

Alternativ zu einer absoluten Messung in Bezug auf den Drehpunkt der Fräswalze oder einem sonstigen Ursprung, kann auch eine Relativmessung aus mindestens zwei Positionswerten auf z. B. dem Meißel durchgeführt werden. Wenn die Punkte so gewählt werden, dass ein Positionswert im Bereich der Meißelspitze ermittelt wird und der mindestens eine weitere Positionswert in einem Bereich der nur geringem oder keinem Verschleiß ausgesetzt ist, dann kann der Längenverschleiß als Differenz der beiden Positionswerte im Vergleich zum Referenzwert, der der Differenz dieser beiden Punkte im Neuzustand des Meißels entspricht, direkt ermittelt werden.

Wird der Referenzwert für die Meißelspitze nach jedem Meißelwechsel wieder ermittelt, lässt sich dadurch auch der Halterverschleiß ermitteln. Hier müssen allerdings Meißel eingesetzt werden, deren Längen a priori bekannt sind (zum Beispiel durch Vorabmessung) oder innerhalb eines gewissen Toleranzbandes liegen (zum Beispiel bei neuen Meißeln das Fertigungstoleranzband). Unter Berücksichtigung des so ermittelten Halterverschleißes lässt sich dann auch der exakte Verschleiß des neuen Meißels auf einem bereits verschlissenen Halter ermitteln. Dies ist dem Umstand zu verdanken, dass der Verschleiß an einem Halter während der Lebensdauer eines Meißels vernachlässigbar gering ist.

Wenn vorgesehen ist, dass aus dem ermittelten Positionswert das Volumen des Meißelkopfs oder eines Teils des Meißelkopfs, insbesondere der Meißelspitze oder eines Teils der Meißelspitze ermittelt werden soll, dann kann aus den Positionen der Punkte, die den Positionswert repräsentieren beispielsweise eine Konturlinie erzeugt werden, mit der sich ein gemitteltes Verschleißvolumen der Meißelspitze und/oder des Meißelkopfes bestimmen lässt.

Dieses Verschleißvolumen kann dann mit einem Referenzwert verglichen werden, der beispielsweise die Konturlinie eines unverschlissenen Werkzeuges wiedergibt. Es ist auch möglich das Verschleißvolumen mit a priori gemessenen, bestimmte Verschleißzustände wiedergebenden Konturlinien als Referenzwert zu vergleichen.

Eine weitere Detaillierung des Verschleißzustandes kann dabei dadurch erreicht werden, dass zur Ermittlung des Referenzwertes die Position zumindest eines Punktes des Meißels, Meißelhalters und/oder Meißelhalter-Wechselsystems im unverschlissenen Neuzustand ermittelt wird.

Der Referenzwert kann ein theoretischer Wert sein, weil er sich z. B. aus den geometrischen Zusammenhängen ableiten lässt, der fest vorgegeben wird (beispielsweise als Meißelkennwert die Länge des Meißelkopfes) oder es kann vorgesehen sein, dass der Referenzwert und der Positionswert im verschlissenen oder teilverschlissenen Zustand ermittelt werden. Dieses Verfahren bietet sich dann an, wenn beispielsweise die aktuelle Verschleißsituation unbekannt ist oder aber weil eine komplette Walze getauscht wird und diese mit bereits verschlissenen Meißelhaltern und Meißeln bestückt ist.

Gemäß einer bevorzugten Erfindungsausgestaltung kann es auch vorgesehen sein, dass dem mindestens einen Positionswert über ein Kennfeld oder einen funktionellen Zusammenhang als Referenzwert ein Verschleißkennwert korreliert wird, wobei der funktionelle Zusammenhang beziehungsweise das Kennfeld a priori ermittelt werden kann. Das Kennfeld kann beispielsweise im Versuch ermittelte Zusammenhänge beinhalten.

Wenn die Verfahrensführung derart ist, dass als Positionswert die Lage der Mittellängsachse des Meißelkopfes und/oder der Meißelspitze ermittelt wird und dass dieser Positionswert mit einem, die ideale Lage der Mittellängsachse beinhaltenden Referenzwert verglichen wird, dann kann auf einfache Weise ein asymetrischer Verschleiß des Meißels detektiert werden.

Ein besonders bevorzugtes Verfahren ist dadurch gekennzeichnet, dass in einem weiteren Rechenschritt der Verschleiß des Meißels und davon isoliert der Verschleiß des Meißelhalters ermittelt wird. Damit lässt sich eine detaillierte Systeminformation erzeugen, die dem Benutzer einen genauen Aufschluss über den Verschleiß der Systemkomponenten gibt.

Dies lässt sich besonders einfach durchführen, wenn das Verfahren dergestalt ist, dass zunächst der aus dem Verschleiß des Meißelhalters und des Meißels addierte Gesamtverschleiß ermittelt wird. Danach wird ein Werkzeugwechsel durchgeführt. Im weiteren Verlauf des Verfahrens muss die Istposition zumindest eines Punktes des auf dem verschlissenen oder teilverschlissenen Meißelhalter montierten Meißels im Neuzustand ermittelt werden. Anschließend wird dieses Messergebnis mit einem Referenzwert dieses zumindest einen Punktes im Neuzustand von Meißel und Meißelhalter verglichen und durch Differenzbildung der Verschleiß des Meißelhalters ermittelt. Der Meißelverschleiß ergibt sich wiederum aus der Differenz zwischen Gesamtverschleiß und Halterverschleiß.

Wenn man davon ausgeht, dass der Halterverschleiß zwischen zwei Meißelwechseln gegen Null geht, kann der Meißelverschleiß nach diesem Verfahren jederzeit ermittelt werden, indem seiner Differenzbildung der Halterverschleiß der jeweils vorausgegangenen Messung herangezogen wird.

Ein weiteres Verfahren kann wie folgt gestaltet werden. Eine erster Referenzwert wird im Neuzustand von Meißel und Halter ermittelt und bis zum Ablegen der Halter gespeichert. Ein zweiter Referenzwert wird eingerichtet und nach jedem Meißelwechsel über eine Referenzmessung neu ermittelt und abgespeichert. Es ergeben sich dann zu jeder Zeit der Meißelverschleiß aus einer Messung mit anschließender Differenzbildung mit dem zweiten Referenzwert, der Gesamtverschleiß aus einer Messung mit anschließender Differenzbildung mit dem ersten Referenzwert und der Halterverschleiß aus der Differenz zwischen dem zweiten und dem ersten Referenzwert.

Alternativ kann die Verfahrensführung auch wie folgt gewählt werden:
Zunächst wird der Gesamtverschleiß ermittelt, indem mindestens eine Position der Meißelspitze mit einer Referenzposition, die vorher im neuen Zustand ermittelt wurde, verglichen wird.

Daraus erhält man den aus Meißelhalter-Verschleiß und Meißelverschleiß zusammengesetzten Gesamtverschleiß. Danach wird die Lage eines zweiten Punktes auf dem Meißel mit einer entsprechenden Referenzposition im Neuzustand des Meißels verglichen. Dieser zweite Punkt liegt näher Richtung Halter als der erste Punkt. Daraus wird der Meißelhalterverschleiß ermittelt. Die Differenz der Verschiebung des zweiten Punktes zur Gesamtverschiebung gibt den Meißelverschleiß an.

Wenn vorgesehen ist, dass zur Ermittlung des Verschleißes des Meißelhalters zumindest ein Punkt des Schaftmeißels, der nur geringem oder keinem Verschleiß ausgesetzt ist als Positionswert ermittelt und mit dem Referenzwert dieses Punktes im unverschlissenen oder teilverschlissenen Zustand verglichen wird, dann kann direkt am Werkzeugsystem der Verschleißzustand des Halters ermittelt werden, ohne dass eine Referenzmessung an einem ausgetauschten Werkzeug vorgenommen werden muss.

Vorzugsweise wird als Positions-/ Referenzwert zumindest ein Punkt einer Ausziehnut des Meißelkopfes ermittelt.

Die Ausziehnut unterliegt nur geringem oder keinem Verschleiß. Eine exakte Verschleißermittlung wird dadurch möglich, dass der Positionswert und/oder der Referenzwert zum Beispiel mittels Laufzeitmessung, Phasenverschiebung oder Triangulation ermittelt wird. Dabei ist es unerheblich, auf welchem physikalischen Effekt das Messprinzip beruht, also akustisch, optisch, magnetisch oder mechanisch.

Wenn das Verfahren derart ausgeführt wird, dass die Drehposition einer Fräswalze, die den Meißel, den Meißelhalter und/oder das Meißelhalter-Wechselsystem trägt, ermittelt wird, dann kann die Drehposition der Walze erfasst und damit die exakte Positionierung des jeweils gemessenen Werkzeuges bestimmt werden. Der jeweilige Meißel kann dann gezielt aufgefunden und beispielsweise bedarfsweise getauscht werden.

Die Erfindung wird im Folgenden anhand von in den Zeichnungen dargestellten Ausführungsbeispielen näher erläutert. Es zeigen:
- Figur 1: in Seitenansicht einen Meißel, nämlich einen Rundschaftmeißel für eine Straßenfräsmaschine, einer Bergbaumaschine, einen Surface Miner oder dergleichen, der in den Halter eines Wechselhalterwerkzeugs für derartige Maschinen eingesetzt ist;
- Figur 2: den Meißelkopf des Meißels gemäß Figur 1 dargestellt in einem Diagramm;
- Figuren 3 bis 7: verschiedene Verschleißzustände des Meißelkopfes in einem Diagramm;
- Figur 8: in schematischer Darstellung und Seitenansicht eine Straßenfräsmaschine;
- Figur 9: eine Fräswalze der Straßenfräsmaschine gemäß Figur 8 mit einer beispielhaften Vermessungseinrichtung beruhend auf dem Prinzip der Triangulation und
- Figur 10: die Fräswalze gemäß Figur 9 mit einer alternativen Ausgestaltung der Vermessungseinrichtung beruhend auf einem Schattenwurfverfahren.

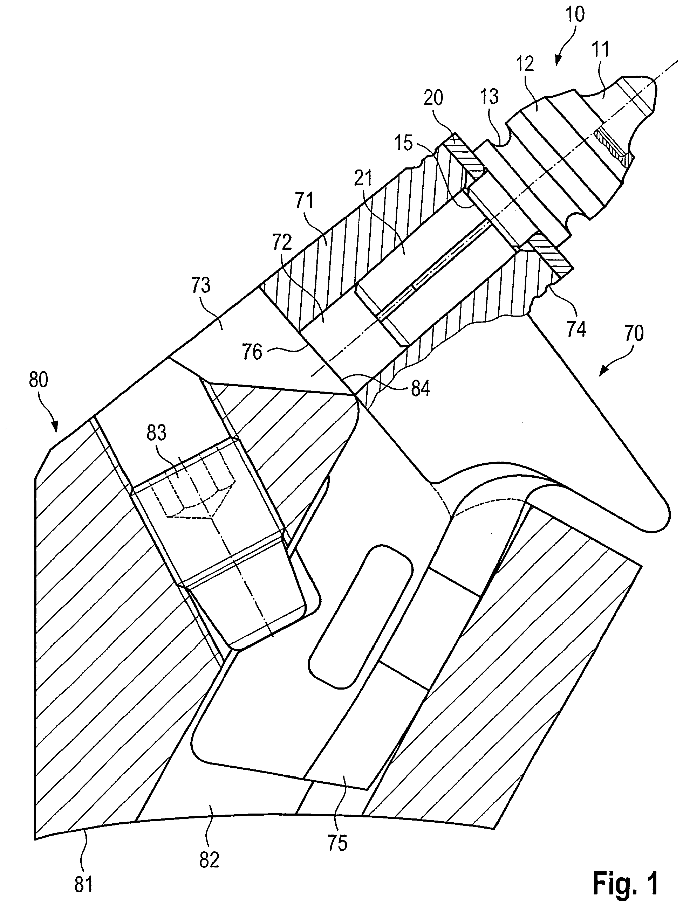

Die Figur 1 zeigt beispielhaft einen Meißel 10, wie er aus dem Stand der Technik bekannt und beispielhaft in der DE 38 18 213 A1 beschrieben ist. Der Meißel 10 weist einen Meißelkopf 12 und einen daran einteilig angeformten Meißelschaft 15 auf. Der Meißelkopf 12 trägt eine Meißelspitze 11, bestehend aus einem Hartwerkstoff, beispielsweise aus Hartmetall.

Diese Meißelspitze 11 ist üblicherweise mit dem Meißelkopf 12 entlang einer Kontaktfläche verlötet. In den Meißelkopf 12 ist eine umlaufende Ausziehnut 13 eingearbeitet. Diese dient derart als Werkzeugaufnahme, dass ein Demontagewerkzeug angesetzt und der Meißel 10 aus einem Meißelhalter 70 demontiert werden kann.

Der Meißelschaft 15 trägt eine längs geschlitzte zylindrische Spannhülse 21. Diese ist in Richtung der Längserstreckung des Meißels 10 unverlierbar, jedoch in Umfangsrichtung frei drehbar am Meißelschaft 15 gehalten. Im Bereich zwischen der Spannhülse 21 und dem Meißelkopf 12 ist eine Verschleißschutzscheibe 20 angeordnet. Im montierten Zustand stützt sich die Verschleißschutzscheibe 20 auf einer Gegenfläche eines Meißelhalters 70 und dem Meißelhalter 70 abgekehrt an der Unterseite des Meißelkopfes 12 ab.

Der Meißelhalter 70 ist mit einem Ansatz 71 ausgestattet, in den eine Meißelaufnahme 72 in Form einer zylindrischen Bohrung eingearbeitet ist. In dieser Meißelaufnahme 72 ist die Spannhülse 21 mit ihrem Außenumfang an der Bohrungsinnenwandung geklemmt gehalten. Die Meißelaufnahme 72 mündet in eine Austreiböffnung 73. Durch diese kann zum Zweck der Demontage des Meißels 10 ein Austreibdorn (nicht gezeigt) eingeführt werden. Dieser wirkt derart auf das Ende des Meißelschaftes 15 ein, dass unter Überwindung der Spannkraft der Spannhülse 21 der Meißel 10 aus der Meißelaufnahme 72 ausgeschoben wird.
Wie die Figur 1 erkennen lässt, ist der Ansatz 71 in einem zylindrischen Bereich unterhalb der Verschleißschutzscheibe 20 mit zwei umlaufenden Nuten versehen. Die-se Nuten dienen als Verschleißmarkierungen 74. Während des Betriebseinsatzes rotiert die Verschleißschutzscheibe 20 und kann dabei auf der Auflagefläche des Ansatzes 71 Verschleiß (Meißelhalterverschleiß) bewirken. Wenn die Auflagefläche soweit abgearbeitet ist, dass die zweite Verschleißmarkierung erreicht ist, gilt der Meißelhalter 70 als derart abgenutzt, dass er ausgewechselt werden muss.

Der Meißelhalter 70 weist einen Steckansatz 75 auf, der in eine Steckaufnahme 82 eines Basisteils 80 einführbar und dort mittels einer Spannschraube 83 geklemmt werden kann.

Die Spannschraube 83 presst dabei eine Anlagefläche 76 des Meißelhalters 70 auf eine Stützfläche 84 des Basisteils 80. Das Basisteil 80 selbst ist, wie in der Figur 1 nicht weiter dargestellt, über seine Unterseite 81 auf das Fräswalzenrohr einer Fräswalze aufgeschweißt.

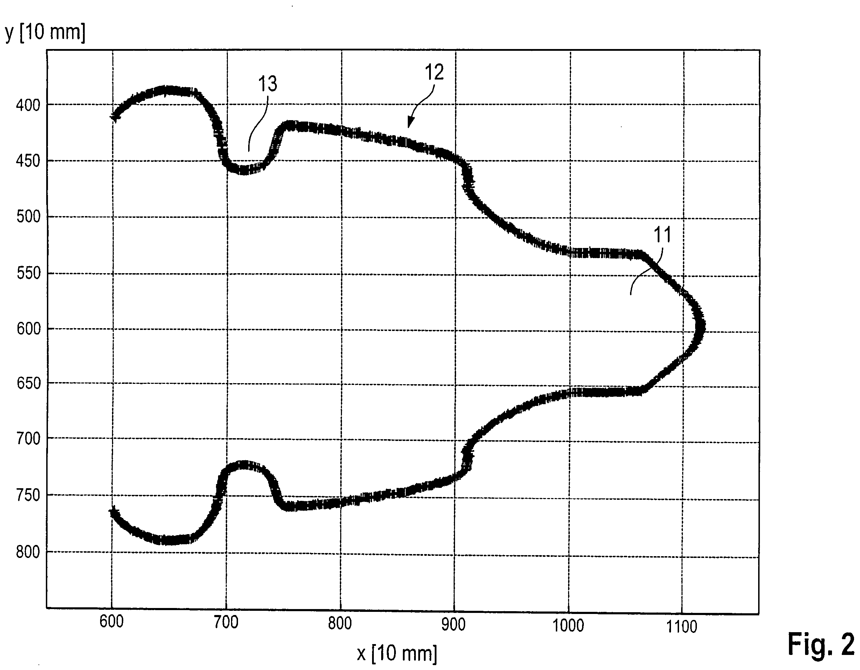

Zur Ermittlung des Verschleißzustandes des am Meißelhalter montierten Meißels 10 wird eine berührungslose Vermessung des Meißelkopfes 12 vorgenommen. Dabei wird ein festgelegter Punkt oder werden mehrere Punkte des Meißelkopfes 12 als Positionswert gemessen/ ermittelt. Die Figur 2 zeigt die Kontur eines unverschlissenen Meißelkopfes 12 in Seitenansicht. Diese Kontur ist in einem Diagramm veranschaulicht, wobei die Erstreckung des Meißelkopfes 12 in Richtung der Meißellängsachse des Meißels 10 (x-Achse) über der Erstreckung in Breitenrichtung (senkrecht zur Mittellängsachse, d. h. y-Achse) aufgetragen ist. Die Kontur des Meißelkopfes 12 (inklusive Meißelspitze 11) wird durch eine Vielzahl von gemessenen Punkten zusammengesetzt, wobei die linienförmige Begrenzung (Konturlinie) eine Interpolation dieser Positionswerte darstellt.

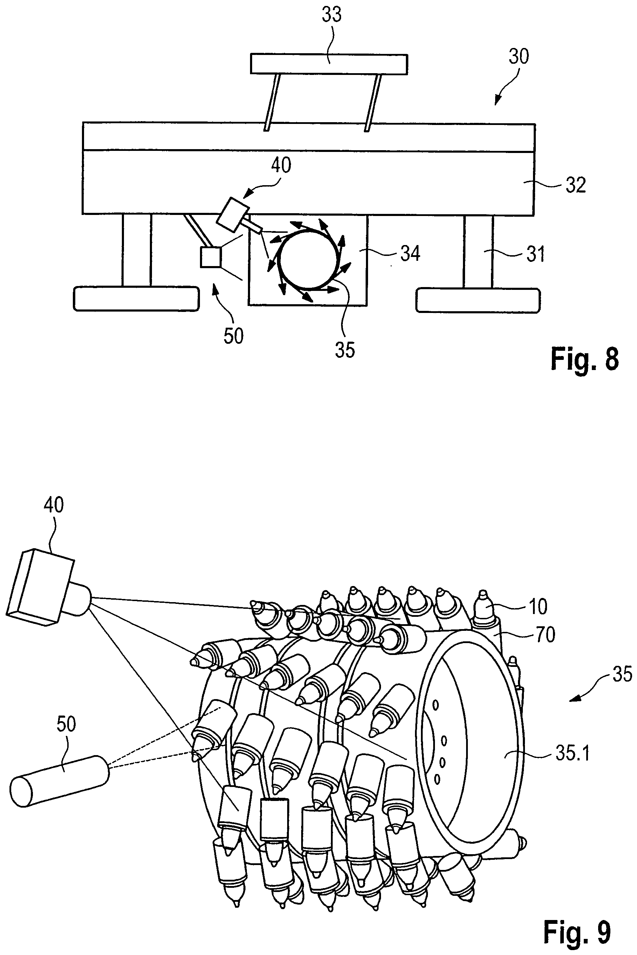

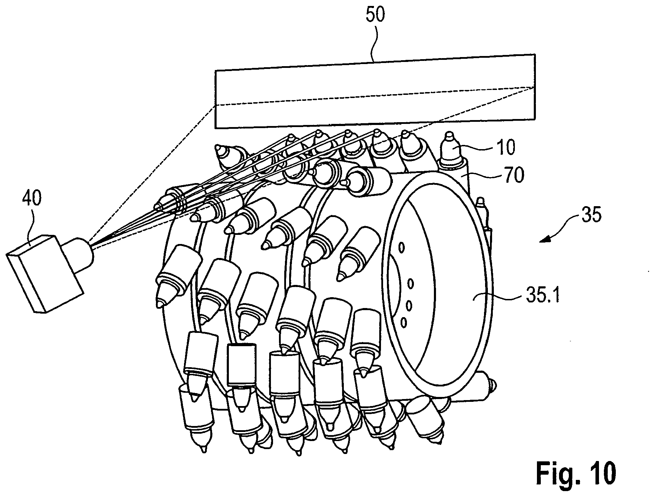

Die Vermessung an einer Fräswalze 35 (siehe Figuren 9 und 10) kann dann vorgenommen werden, wenn der Meißel 10 im unverschlissenen oder teilverschlissenen Zustand vorliegt. Dann können diese Punkte, die errechnete Meißelkopf-Kontur oder aber auch nur ein einzelner Meßpunkt erfasst und als Referenzwert in einer Speichereinheit abgespeichert werden.

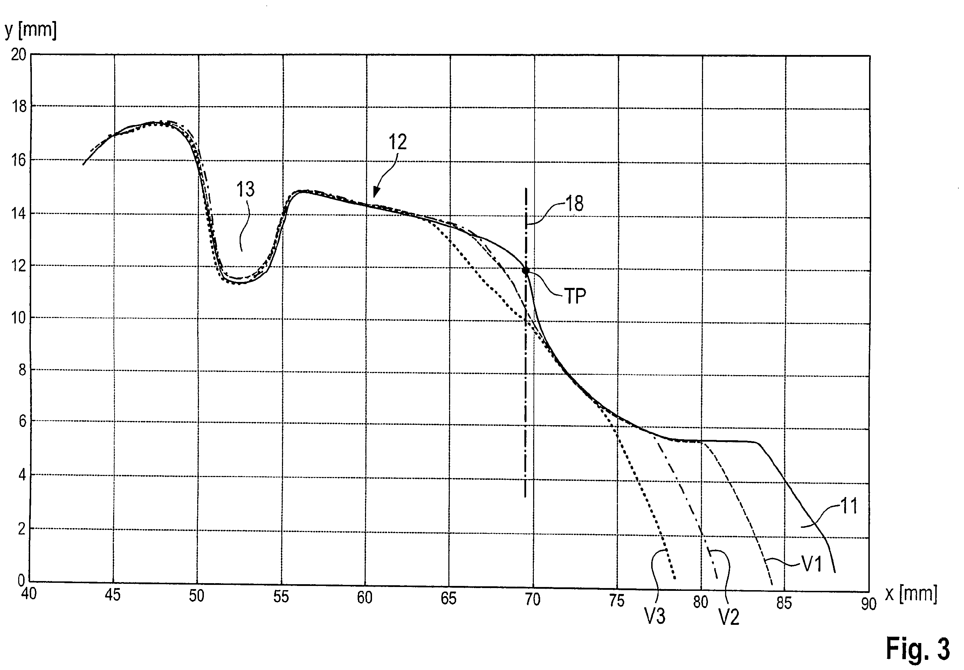

Die Figur 3 zeigt nun verschiedene Meßbilder eines Meißels 10. Dabei sind der Meißelkopf 12 im unverschlissenen Zustand sowie drei gemessene Verschleißzustände V1 bis V3 dargestellt. Der Verschleißzustand V3 stellt den Zustand dar, in dem der Meißel 10 für eine weitere Bearbeitung nicht mehr geeignet ist und getauscht werden muss. Durch Vergleich des Referenzwertes (Kontur im unverschlissenen Zustand) mit der jeweils gemessenen aktuellen Meißelkopfkontur (Verschleißzustände V1, V2 oder V3) die den Positionswert wiedergeben, lässt sich der Verschleiß ermitteln.

Die Konturen müssen zueinander ausgerichtet werden. Durch den Halterverschleiß, oder sonstige Fehlerursachen, befinden sich unverschlissene Konturbereiche nicht notwendigerweise an den gleichen Absolutpositionen (beziehungsweise Relativpositionen zur Walzendrehachse). Um die Konturen zueinander ins Verhältnis zu setzen, benötigt man wieder Referenzmerkmale, die eindeutig identifizierbar sind, im unverschlissenen und verschlissenen Zustand auftauchen und damit eine Ausrichtung und ausschließende Auswertung gestatten. Als Referenzmerkmale können die Ausziehnut 13, die Verschleißmarkierungen 74, die Verschleißschutzscheibe 20 oder andere markante Bereiche dienen, die einem geringen oder keinem Verschleiß unterliegen.

Wie die Figur 3 veranschaulicht, nimmt die Länge des Meißelkopfes 12 während des Betriebseinsatzes ab. Durch Differenzbildung der Konturlinien in einer Schalteinheit, lässt sich eine Aussage über den Verschleißzustand generieren, die dem Benutzer beispielsweise in einer Anzeigeeinheit visualisiert wird. Anstatt der Vermessung der gesamten Kontur des Meißelkopfes 12, lässt sich auch nur ein Teil der Kontur oder ein einzelner Punkt, insbesondere das vordere Ende der Meißelspitze 11 als Positionswert erfassen. Eine weitere Detaillierung der Verschleißaussage lässt sich erreichen, wenn getrennt der Verschleiß der Meißelspitze 11 und des Meißelkopfes 12 (ohne Meißelspitze 11) erfasst wird.

Dies ist mit der a priori bekannten Position der Anbindung (Anbindungspunkt TP/ Anbindungslinie 18) der Meißelspitze 11 an den Meißelkopf 12 im unverschlissenen Zustand einfach möglich.

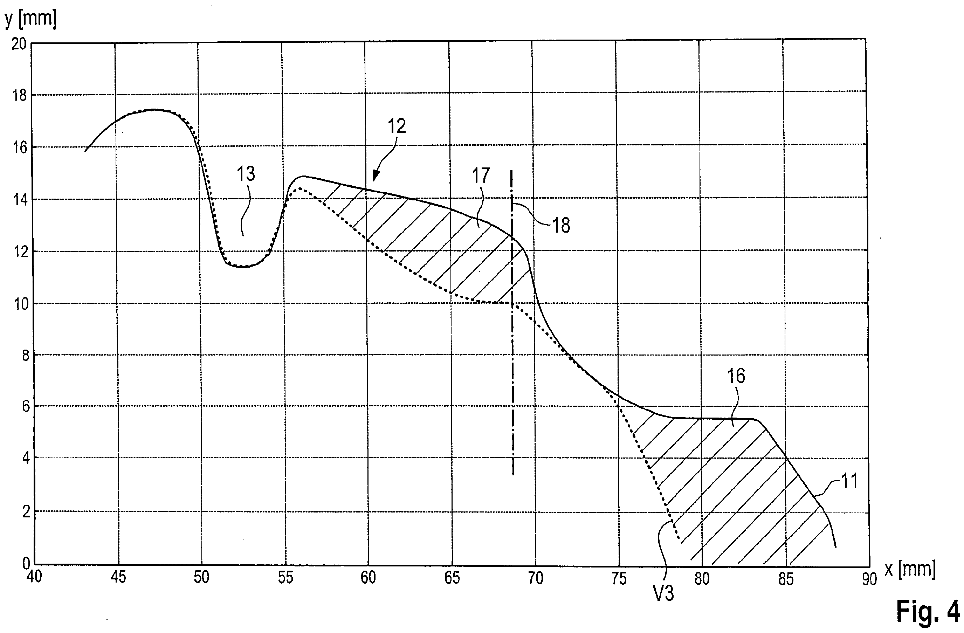

Wenn die gemessenen Verschleißzustände V1 bis V3 der unverschlissenen Kontur des Meißelkopfes 12, wie in Figur 2 gezeigt, überlagert sind, dann kann durch Integration der gemessenen Konturen entlang der x-Achse das Gesamtverschleißvolumen ermittelt werden. In der Figur 4 ist das Verschleißvolumen mit schraffierten Flächen gezeigt.

Demnach kann als Positionswert das Verschleißvolumen mit einem Referenzwert verglichen werden. Der Referenzwert kann dabei von einem funktionellen Zusammenhang oder einem Kennfeld gebildet sein, wobei unterschiedliche Verschleißvolumina mit zugeordneten Verschleißzuständen korreliert sind (beispielsweise a mm³ Verschleißvolumen entspricht b% Verschleiß). Aus der a priori bekannten Position des Anbindungspunktes TP/ Anbindungslinie 18 kann dann auch über Differenzbildung getrennt der Spitzenverschleiß 16 und der Kopfverschleiß 17 ermittelt werden. Diese Verschleißerkennung gibt dem Nutzer beispielsweise eine qualitative Aussage darüber, ob der Meißel 10 noch für bestimmte Fräsaufgaben geeignet ist. So kann ein Meißel, der seine Verschleißgrenze zwar noch nicht erreicht hat, aber einen gewissen Spitzenverschleiß aufweist, zum Beispiel nicht mehr für Feinfräsarbeiten verwendet werden.

Bei den Verfahren gemäß Figuren 3 und 4 werden die gemessenen Positionswerte den Referenzwerten überlagert. Während des Bearbeitungsprozesses verschleißt nicht alleine nur der Meißelkopf 12, sondern auch der Meißelhalter. Dieser arbeitet sich in Richtung der Mittellängsachse des Meißels 10 ab. Die isolierte Ermittlung des Längenverschleißes des Meißelhalters in dieser Richtung gelingt nun einfach dadurch, dass das Maß der notwendigen Verlagerung des Positionswertes in den Referenzwert um die in den Figuren 3 und 4 angegebene Überlagerungen zu erhalten (Verschiebung des Meißelkopfes 12 in Richtung der x-Achse, bis z. B. die Ausziehnuten der einzelnen Verschleißzustände deckungsgleich sind) eine absolute Verschleißgröße des Meißelhalters bildet. Die Gesamtverlagerung der Meißelspitze 11 abzüglich dieser Verschleißgröße gibt dann getrennt den Meißelverschleiß an.

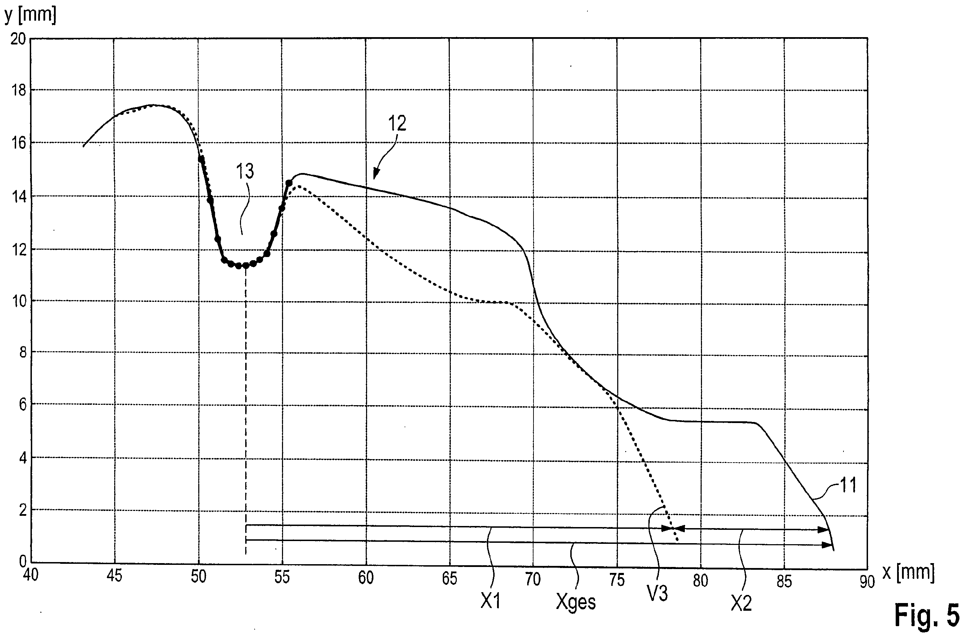

In der Figur 5 ist eine Verfahrensvariante gezeigt, bei der eine Verschleißaussage anhand der Vermessung eines eindeutig identifizierbaren Merkmals auf dem Meißel getroffen wird. Das Merkmal bzw. die Umgebung dieses Merkmals soll dabei keinem oder nur geringem Verschleiß unterworfen sein. Gemäß Figur 5 wird als eindeutiges Merkmal und Bezugskriterium die Ausziehnut 13, ein Teil der Ausziehnut 13 oder ein Punkt (beispielsweise der Nutgrund) der Ausziehnut 13 verwendet.

Weiterhin wird nun von diesem Merkmal der Abstand zur Position des freien Endes der Meißelspitze 11 (Positionswert) ermittelt. Auf diese Weise lässt sich dann auf einfache Weise der Längenverschleiß ermitteln. Wenn die Position der Meißelspitze 11 bekannt ist, kann dann wieder, wie oben beschrieben, auch der Meißelhalterverschleiß bestimmt werden. Alternativ oder zusätzlich kann wie bei Figur 4 vorgegeben auch der Volumenverschleiß bzw. die zugeordneten Verschleißlängen (X = Gesamtverschleiß) ermittelt werden.

Die Relativmessung unter Verwendung eines eindeutig identifizierbaren Merkmales als Bezugspunkt hat den Vorteil, dass eine Verschleißerkennung auch dann vorgenommen werden kann, wenn eine Referenzmessung nicht vorliegt, weil zum Beispiel die Länge des getauschten Meißels 10 oder der Verschleißzustand des Meißels 10 beziehungsweise Meißelhalters nicht bekannt ist.

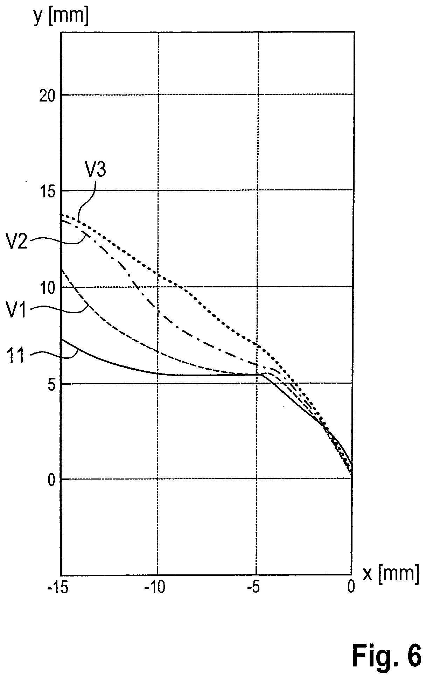

Figur 3 zeigt die Änderung der Meißelkopfkontur für zunehmenden Verschleiß. Man erkennt die abnehmende Länge des Meißelkopfes 12. Verschiebt man die gemessenen Meißelkopfkonturen jeweils in den Punkt der maximalen Länge des Meißels 10 (Figur 6), so erkennt man den zunehmenden Verschleißzustand des Meißels 10 zum einen an dem sich ändernden Kopfwinkel (der Winkel wird mit zunehmendem Meißelverschleiß flacher) und zum anderen am zunehmenden Volumen des Meißelkopfes 12, wenn man von der jeweiligen Spitze aus über eine bestimmte Länge hin die Fläche unter der Konturkurve integriert. Es lässt sich somit ein funktioneller Zusammenhang zwischen dem Kopfvolumen /-fläche und der absoluten Meißellänge für einen bestimmten Meißeltyp zum Beispiel mittels a priori durchgeführter Versuche zur Ermittlung der Referenzwerte herstellen.

Ist dieser Zusammenhang bekannt, kann durch Messung/ Integration des jeweilig aktuellen Kopfvolumens die Länge des Meißels 10 ermittelt werden. Dieses Verfahren setzt allerdings voraus, dass die Meißelspitze 11 einen mit der Meißellängsrichtung zunehmenden Querschnitt aufweist. Der Integrationsweg wird vorzugsweise so festgelegt, dass auch bei ganz verschlissenen Meißeln 10 nicht bis in den Kopfbereich hinein integriert wird, da Kopfauswaschungen das Ergebnis verfälschen.

Dieses Verfahren hat den Vorteil, dass kein Referenzpunkt benötigt wird, der wenig Verschleiß unterliegt. Manchmal ist ein solcher Referenzpunkt nicht vorhanden oder sehr schlecht identifizierbar.

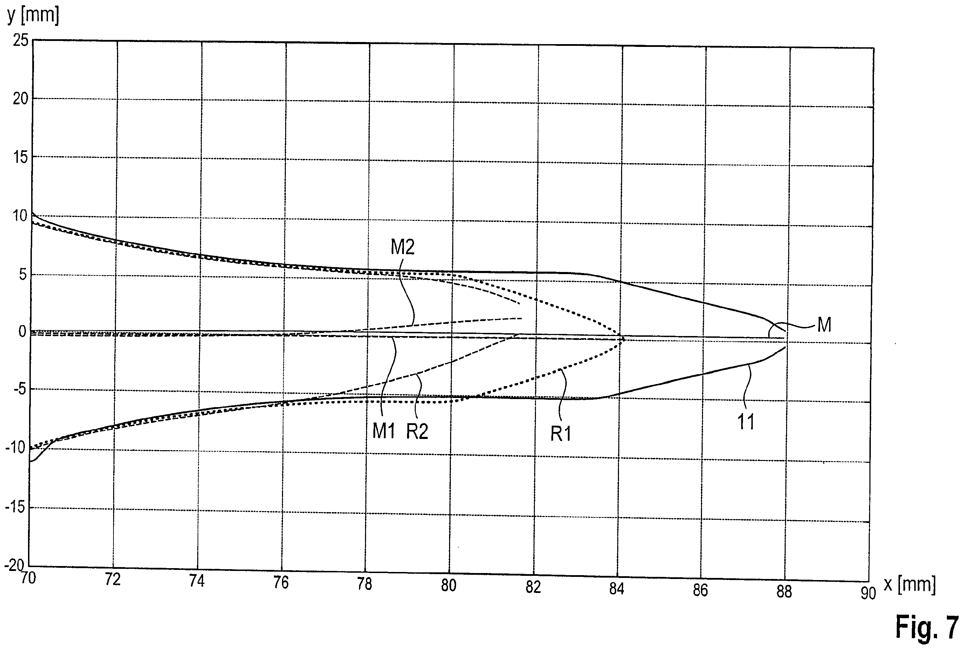

Zur Bestimmung des Asymmetriegrads des Verschleißes kann zum Beispiel der Mittelwert zwischen oberer und unterer Konturlinie gebildet werden. Figur 7 zeigt die Konturlinien sowie deren Mittelwerte für eine neue, eine rotationssymmetrisch (R1) und eine nicht rotationssymmetrisch (R2) verschlissene Meißelspitze 11. Man erkennt, dass beim asymmetrisch verschlissenen Meißel 10 die Mittelinien M2 der beiden Konturlinien eine gewisse Neigung gegenüber der Meißellängsachse aufweist. Die Winkellage könnte einfach ausgewertet werden um den Asymmetriegrad des Verschleißes zu bestimmen. Es können aber auch direkt die Lage/ Abweichungen mehrerer Konturlinien bestimmt/ ermittelt werden.

Nach dem gleichen Verfahren kann ein asymmetrischer Verschleiß des Meißelkopfes 12 bestimmt werden. Üblicherweise wird jedoch ein asymmetrisch verschlissener Meißelkopf 12 einhergehen mit einer asymmetrisch verschlissenen Meißelspitze 11. Damit genügt eine Analyse der Meißelspitze 11.

In der Figur 8 ist eine Straßenfräsmaschine 30 symbolisiert, bei der ein Maschinenkörper 32 von vier säulenartigen Fahreinheiten 31 getragen ist. Die Straßenfräsmaschine 30 kann ausgehend von einem Leitstand 33 bedient werden. In einem Fräswalzenkasten 34 ist eine Fräswalze 35 angeordnet.

Zur Vermessung des Verschleißzustandes nach einem der oben beschriebenen Verfahren ist eine Lichtquelle 50 und eine Kamera 40 der Fräswalze 35 zugeordnet. In der Figur 9 ist die Fräswalze 35 deutlicher gezeigt. Auf der Oberfläche eines Fräsrohrs 35.1 der Fräswalze 35 sind eine Vielzahl von Meißelhalterwechselsystemen mit jeweils einem Meißelhalter 70 befestigt. In jedem Meißelhalter 70 ist ein Meißel 10 gehalten. Im vorliegenden Beispiel sind die Meißelhalter 70 unmittelbar auf die Fräswalze 35 aufgeschweißt.

Es ist jedoch auch der Einsatz des Meißelhalterwechselsystems gemäß Figur 1 denkbar. Dann wird das Basisteil 80 auf die Fräswalze 35 aufgeschweißt.

Als Vorrichtung für die Vermessung der Meißelkonturen wird ein optisches System verwendet, bei dem in einer Art "Abscannvorgang" jeweils eine Höhenlinie der Walzenoberfläche vermessen wird. Als Messprinzip kann hier zum Beispiel ein Triangulationsverfahren eingesetzt werden, bei dem die Walzenoberfläche zum Beispiel durch eine Lichtquelle 50, beispielsweise eine Laserlinie beleuchtet wird. Wird die so erzeugte Laserlinie von einer Kamera 40 unter einem anderen Winkel betrachtet, so ergeben sich Höhenunterschiede auf der Walzenoberfläche (zum Beispiel durch die Meißel 10) als Verschiebungen dieser Projektionslinien. Bei bekanntem Differenzwinkel zwischen Kamera 40 und Lichtquelle 50 können die Höhenkoordinaten berechnet werden. Durch Drehen der Fräswalze 35 kann so ein Höhenprofil der Walzenmantelfläche erstellt werden, aus dem dann die Konturlinie der einzelnen Meißel 10 herausgelesen werden kann.

Ein weiteres optisches Messprinzip für Vermessung der Höhe und/oder Geometrie der Meißel 10 ist das Schattenwurfverfahren gemäß Figur 10. Bei diesem Verfahren wird die Tatsache ausgenutzt, dass die durch einen von einer Lichtquelle 50 erzeugten Lichtvorhang sich bewegenden Meißel 10 eine Schattenkontur erzeugen, die von einer Kamera 40 beobachtet und ausgewertet werden kann. Der große Vorteil dieses Verfahrens liegt in der Tatsache begründet, dass mit einer einzigen Kamerazeile gearbeitet werden kann, vom Prinzip wie bei einem Dokumentenscanner. Dadurch können insbesondere auch Fräswalzen 35 mit großem Durchmesser und hohen Drehgeschwindigkeiten mit einer hinreichenden Auflösung vermessen werden.
Das mit Bezug auf Figur 10 beschriebene Verfahren kann gemäß einer alternativen Ausgestaltungsvariante der Erfindung abgewandelt werden. Dabei wird wieder mit der Lichtquelle 50 ein Lichtvorhang in Form einer Lichtebene erzeugt. Diese Lichtebene verläuft parallel zur Mittellängsachse der Fräswalze 35 und tangential zur Walzenoberfläche. Dabei ist die Lichtebene so ausgerüstet, dass bei drehender Fräswalze 35 die Meißelspitzen der Meißel 10 zunächst durch die Lichtebene durchtauchen.

Sie werfen dann einen von der Kamera 40 erfassbaren Schatten. Über einen gewissen Walzendrehwinkel werden die Meißel 10 über der Lichtebene geführt, bis sie dann wieder unter der Lichtebene abtauchen.

Bei unverschlissenen Meißeln 10/ Meißelhaltern 70 kann eine Referenzmessung vorgenommen werden. Dabei wird der Zeitpunkt des Durchtritts (Ein- oder Austritt) des Meißels 10 durch die Lichtebene erfasst und der zugehörige Drehwinkel der Fräswalze 35 erfasst. Nach einem Betriebeseinsatz wird nun eine korrespondierende Messung am teilverschlissenen (verschlissenen) Meißel 10 vorgenommen. Der Meißel 10 tritt aufgrund der Längenreduzierung gegenüber einem unverschlissenen System später durch die Lichtebene hindurch und taucht früher unter diese ab. Die korrespondierenden Drehwinkel der Fräswalze 35 können nun als Positionswert ermittelt werden. Diese Drehwinkel werden nun mit den Drehwinkeln am unverschlissenen System (Referenzwert) verglichen. Durch Differenzbildung kann nun aus dem Differenzwinkel eine Berechnung des Verschleißzustandes erfolgen oder es wird der Differenzdrehwinkel direkt als Verschleißkriterium herangezogen.

Zweckmäßiger Weise wird das Messsystem während des Fräsprozesses beispielsweise in Phasen, in denen nicht gemessen wird in einer entsprechenden Schutzvorrichtung verstaut. Bei Verwendung einer zweiten Kamera 40 kann zum Beispiel eine direkte Vermessung der Höhengeometrie ohne zusätzliche Beleuchtungsquelle vorgenommen werden.

Alternativ können durch entsprechende Anordnung einer zweiten Kamera zusätzliche Messungen der Konturen durchgeführt werden, so dass die Informationsdichte insgesamt gesteigert wird und die Detektionswahrscheinlichkeit für asymmetrische Verschleißzustände erhöht wird.

Alternativ kann die Position der Meißelspitze 11 beziehungsweise die Lage der Meißelkopfkontur in zumindest einem Schritt auch durch andere, abstandsmessende Sensorik (zum Beispiel Ultraschallsensorik, Näherungsschalter) erfasst werden.

## Patentansprüche

1. Verfahren zur Ermittlung des Verschleißzustandes eines Fräswerkzeuges, nämlich eines Meißels (10), eines Meißelhalters mit einem Meißel (10) oder eines Meißelhalter-Wechselsystems mit einem Meißel (10) und einem Meißelhalter (70),
wobei eine Fräswalze (35) vorgesehen ist, wobei die Position zumindest eines Punktes, nachfolgend Positionswert genannt, des Meißels (10) und/oder des Meißelhalters (70) mittels eines Meßverfahrens ermittelt wird, wobei eine absolute Messung in Bezug auf den Drehpunkt der Fräswalze (35) oder einen sonstigen Ursprung durchgeführt wird, wobei dieses Messergebnis oder eine Verrechnung dieses Messergebnisses in einer Schalteinheit mit mindestens einem in einer Speichereinheit gespeicherten Referenzwert verglichen wird, und wobei über den Vergleich des Positionswertes mit dem Referenzwert eine Bezugsgröße bestimmt wird, die eine quantitative Aussage über den Verschleiß des Fräswerkzeuges beinhaltet.

2. Verfahren nach Anspruch 1,
**dadurch gekennzeichnet,**
**dass** zur Erfassung des Positionswertes ein berührungsloses Meßverfahren, insbesondere ein optisches Meßverfahren verwendet wird.

3. Verfahren nach einem der Ansprüche 1 oder 2,
**dadurch gekennzeichnet,**
**dass** als Positionswert die Position der Meißelspitze (11) erfasst wird, oder dass als Positionswert die Position der Meißelspitze (11) erfasst wird, und dass mindestens ein weiterer Punkt des Meißels (10), der nur geringem oder keinem Verschleiß ausgesetzt ist als Positionswert ermittelt wird und aus der Differenz dieser beiden Positionswerte der Meißelverschleiß bestimmt wird.

4. Verfahren nach einem der Ansprüche 1 bis 3,
**dadurch gekennzeichnet,**
**dass** zur Ermittlung der Meißelkopfoberfläche oder eines Teils der Meißelkopfoberfläche als Positionswert mehrere Punkte oder die Kontur der Meißeloberfläche oder eines Teils der Meißelkopfoberfläche erfasst werden, oder
**dass** zur Ermittlung der Meißelkopfoberfläche oder eines Teils der Meißelkopfoberfläche als Positionswert mehrere Punkte oder die Kontur der Meißeloberfläche oder eines Teils der Meißelkopfoberfläche erfasst werden, und
**dass** aus dem ermittelten Positionswert das Volumen des Meißelkopfs (12) oder eines Teils des Meißelkopfs (12), insbesondere der Meißelspitze (11) oder eines Teils der Meißelspitze (11) ermittelt wird.

5. Verfahren nach einem der Ansprüche 1 bis 4,
**dadurch gekennzeichnet,**
**dass** mittels eines Messwertvergleiches getrennt der Verschleißzustand des Meißelkopfs (12) ohne Meißelspitze (11) und isoliert der Meißelspitze (11) allein ermittelt wird.

6. Verfahren nach einem der Ansprüche 1 bis 5,
**dadurch gekennzeichnet,**
**dass** zur Ermittlung des Referenzwertes zumindest ein Punkt des Meißels (10), Meißelhalters und/oder Meißelhalter-Wechselsystems im unverschlissenen Neuzustand ermittelt wird, und/oder dass als Referenzwert ein Werkzeugkennwert abgespeichert oder abspeicherbar ist.

7. Verfahren nach einem der Ansprüche 1 bis 6,
**dadurch gekennzeichnet,**
**dass** der Referenzwert und/oder der Positionswert im verschlissenen oder teilverschlissenen Zustand ermittelt werden.

8. Verfahren nach einem der Ansprüche 1 bis 7,
**dadurch gekennzeichnet,**
**dass** dem Positionswert über ein Kennfeld oder einen funktionellen Zusammenhang als Referenzwert ein Verschleißkennwert korreliert wird.

9. Verfahren nach einem der Ansprüche 1 bis 8,
**dadurch gekennzeichnet,**
**dass** als Positionswert die Lage der Mittellängsachse (M1, M2) des Meißelkopfes (12) und/oder der Meißelspitze (11) ermittelt wird und
**dass** dieser Positionswert mit einem, die ideale Lage der Mittellängsachse (M) beinhaltenden Referenzwert verglichen wird.

10. Verfahren nach einem der Ansprüche 1 bis 9,
**dadurch gekennzeichnet,**
**dass** in einem weiteren Rechenschritt der Verschleiß des Meißels (10) und davon isoliert der Verschleiß des Meißelhalters (70) ermittelt wird.

11. Verfahren nach Anspruch 10,
**dadurch gekennzeichnet,**
**dass** zunächst der aus dem Verschleiß des Meißelhalters (70) und des Meißels (10) addierte Gesamtverschleiß ermittelt wird,
**dass** dann der Meißel (10) gegen einen Meißel (10) im Neuzustand getauscht wird,
**dass** dann die Istposition zumindest eines Punktes des montierten Meißels (10) im Neuzustand ermittelt wird,
**dass** anschließend dieses Messergebnis mit einem Referenzwert dieses zumindest einen Punktes im Neuzustand von Meißel (10) und Meißelhalter (70) verglichen und durch Differenzbildung der Verschleiß des Meißelhalters (70) ermittelt wird.

12. Verfahren nach Anspruch 11,
**dadurch gekennzeichnet,**
**dass** der Verschleiß des Meißels (10) durch Differenzbildung aus Gesamtverschleiß und Halterverschleiß ermittelt wird, oder
**dass** der Verschleiß des Meißels (10) durch Differenzbildung aus Gesamtverschleiß und Halterverschleiß ermittelt wird, und
**dass** zur Differenzbildung der Halterverschleiß aus der vorausgegangenen Messung herangezogen wird.

13. Verfahren nach einem der Ansprüche 1 bis 10,
**dadurch gekennzeichnet,**
**dass** ein erster Referenzwert im Neuzustand von Meißel und Halter ermittelt wird, dass ein zweiter Referenzwert mitgeführt wird, der nach jedem Meißelwechsel über eine neue Referenzmessung aktualisiert wird und dass aus den beiden Referenzwerten der Halterverschleiß ermittelt wird, oder
**dass** ein erster Referenzwert im Neuzustand von Meißel und Halter ermittelt wird, dass ein zweiter Referenzwert mitgeführt wird, der nach jedem Meißelwechsel über eine neue Referenzmessung aktualisiert wird und dass aus den beiden Referenzwerten der Halterverschleiß ermittelt wird, und
**dass** ein Positionswert an einem verschlissenen Meißel ermittelt wird und über Differenzbildung mit dem ersten Referenzwert der Gesamtverschleiß und über Differenzbildung mit dem zweiten Referenzwert der Meißelverschleiß bestimmt wird.

14. Verfahren nach einem der Ansprüche 1 bis 10,
**dadurch gekennzeichnet,**
**dass** ein erster Referenzpunkt an der Meißelspitze und ein zweiter Referenzpunkt näher Richtung Halter ermittelt wird und im weiteren Verlauf ein erster Positionswert an der Meißelspitze und ein zweiter Positionswert an der Stelle näher Richtung Halter eines verschlissenen Meißel ermittelt wird und über Differenzbildung des ersten Positionswertes mit dem ersten Referenzwert der Gesamtverschleiß und über Differenzbildung des zweiten Positionswertes mit dem zweiten Referenzwert der Halterverschleiß bestimmt wird.

15. Verfahren nach einem der Ansprüche 1 bis 10,
**dadurch gekennzeichnet,**
**dass** zur Ermittlung des Verschleißes des Meißelhalters (70) zumindest ein Punkt des Meißels (10), der nur geringem oder keinem Verschleiß ausgesetzt ist als Positionswert ermittelt und mit dem Referenzwert dieses Punktes im unverschlissenen oder teilverschlissenen Zustand verglichen wird.

16. Verfahren nach einem der Ansprüche 1 bis 15,
**dadurch gekennzeichnet,**
**dass** als Positions-/ Referenzwert zumindest ein Punkt einer Ausziehnut (13) des Meißelkopfes (12) ermittelt wird.

17. Verfahren nach einem der Ansprüche 1 bis 16,
**dadurch gekennzeichnet,**
**dass** der Positionswert und/oder der Referenzwert mittels Laufzeitmessung, Phasenverschiebung oder Triangulation ermittelt wird.

18. Verfahren nach einem der Ansprüche 1 bis 17,
**dadurch gekennzeichnet,**
**dass** die Drehposition einer Fräswalze, die den Meißel (10), den Meißelhalter (70) und/oder das Meißelhalter-Wechselsystem trägt, ermittelt wird, oder dass die Drehposition einer Fräswalze, die den Meißel (10), den Meißelhalter (70) und/oder das Meißelhalter-Wechselsystem trägt, ermittelt wird, und dass sowohl dem Referenzwert als auch dem Positionswert ein Drehwinkel der Fräswalze (35) korreliert wird, und
**dass** aus der Verrechnung dieser Drehwinkel der Verschleißzustand des Fräswerkzeugs ermittelt wird.

## Claims

1. Method for determining the state of wear of a milling tool, namely a chisel(10), a chisel holder with a chisel (10) or a chisel holder exchange system with a chisel (10) and a chisel holder (70),
wherein a milling drum (35) is provided,
wherein, the position of at least one point, hereinafter referred to as "position value", of the chisel (10) and/or of the chisel holder (70) is determined by means of a measuring method, wherein an absolute measurement being carried out with respect to the point of rotation of the milling drum (35) or another origin,
wherein this measurement result or a calculation of this measurement result in a switching unit is compared with at least one reference value stored in a memory unit, and wherein the comparison of the position value with the reference value is used to determine a reference variable which contains a quantitative statement about the wear of the milling tool.

2. Method according to claim 1,
**characterized**
**in that** a contactless measuring method, in particular an optical measuring method, is used to detect the position value.

3. Method according to one of claims 1 or 2,
**characterized**
**in that** the position of the chisel tip (11) is detected as the position value, or
**in that** the position of the chisel tip (11) is detected as the position value, and
**in that** at least one further point of the chisel (10), which is exposed to only slight wear or no wear, is determined as a position value, and the chisel wear is determined from the difference between these two position values.

4. Method according to one of the claims 1 to 3,
**characterized**
**in that** in order to determine the chisel head surface or part of the chisel head surface, a plurality of points or the contour of the chisel surface or part of the chisel head surface are detected as the position value, or
**in that**, in order to determine the chisel head surface or part of the chisel head surface, a plurality of points or the contour of the chisel surface or part of the chisel head surface are detected as a position value, and
**in that** the volume of the chisel head (12) or of a part of the chisel head (12), in particular of the chisel tip (11) or of a part of the chisel tip (11), is determined from the determined position value.

5. Method according to any one of claims 1 to 4,
**characterized**
**in that** the state of wear of the chisel head (12) without chisel tip (11) and isolated of the chisel tip (11) alone is determined separately by means of a measured value comparison.

6. Method according to one of the claims 1 to 5,
**characterized**
**in that** at least one point of the chisel (10), chisel holder and/or chisel holder replacement system in the unworn new state is determined for determining the reference value, and/or
**in that** a tool characteristic value is stored or can be stored as the reference value.

7. Method according to any one of claims 1 to 6,
**characterized**
**in that** the reference value and/or the position value are determined in the worn or partially worn state.

8. Method according to one of the claims 1 to 7,
**characterized**
**in that** a characteristic wear value is correlated to the position value via a characteristic diagram or a functional relationship as reference value.

9. Method according to one of claims 1 to 8,
**characterized**
**in that** the position of the central longitudinal axis (M1, M2) of the chisel head (12) and/or of the chisel tip (11) is determined as the position value, and
**in that** this position value is compared with a reference value containing the ideal position of the central longitudinal axis (M).

10. Method according to one of the claims 1 to 9,
**characterized**
**in that** in a further calculation step, the wear of the chisel (10) and, isolated therefrom, the wear of the chisel holder (70) is determined.

11. Method according to claim 10,
**characterized**
**in that** in that first of all the total wear added from the wear of the chisel holder (70) and of the chisel (10) is determined,
**in that** the chisel (10) is then exchanged for a chisel (10) in the new state,
**in that** the actual position of at least one point of the mounted chisel (10) in the new state is then determined,
**in that** this measurement result is then compared with a reference value of this at least one point in the new state of the chisel (10) and the chisel holder (70), and the wear of the chisel holder (70) is determined by forming the difference.

12. Method according to claim 11,
**characterized**
**in that** the wear of the chisel (10) is determined by calculating the difference between the total wear and the holder-wear, or
**in that** the wear of the chisel (10) is determined by calculating the difference between the total wear and the holder-wear, and
**in that** the holder-wear from the preceding measurement is used to form the difference.

13. Method according to one of the claims 1 to 10,
**characterized**
**in that** a first reference value is determined when the chisel and holder are new, in that a second reference value is carried along, which is updated after each chisel change by means of a new reference measurement, and in that the holder-wear is determined from the two reference values, or
**in that** a first reference value is determined when the chisel and holder are new, in that a second reference value is carried along, which is updated after each chisel change by means of a new reference measurement, and in that the holder-wear is determined from the two reference values, and
**in that** a position value is determined on a worn bit and the total wear is determined by forming the difference with the first reference value and the chisel wear is determined by forming the difference with the second reference value.

14. Method according to one of claims 1 to 10,
**characterized**
**in that** a first reference point at the chisel tip and a second reference point closer in the direction of the holder are determined and, in the further course, a first position value at the chisel tip and a second position value at the point closer in the direction of the holder of a worn chisel are determined and the total wear is determined by forming the difference between the first position value and the first reference value and the holder-wear is determined by forming the difference between the second position value and the second reference value.

15. Method according to one of claims 1 to 10,
**characterized**
**in that** in order to determine the wear of the chisel holder (70), at least one point of the chisel (10) which is exposed to only slight wear or no wear is determined as a position value and is compared with the reference value of this point in the unworn or partially worn state.

16. Method according to one of claims 1 to 15,
**characterized**
**in that** at least one point of an extraction groove (13) of the chisel head (12) is determined as the position/reference value.

17. Method according to one of the claims 1 to 16,
**characterized**
**in that** the position value and/or the reference value is determined by means of travel time measurement, phase shift or triangulation.

18. Method according to any one of claims 1 to 17,
**characterized**
**in that** the rotational position of a milling drum carrying the chisel (10), the chisel holder (70) and/or the chisel holder exchange system is determined, or
**in that** the rotational position of a milling drum which carries the chisel (10), the chisel holder (70) and/or the chisel holder exchange system is determined, and
**in that** an angle of rotation of the milling drum (35) is correlated with both the reference value and the position value, and
**in that** the state of wear of the milling tool is determined from the calculation of these angles of rotation.

## Revendications

1. Méthode pour déterminer l'état d'usure d'un outil de fraisage, à savoir un pic (10), un porte-pic avec un pic (10) ou un système d'échange de porte-pic avec un pic (10) et un porte-pic (70),
dans lequel un tambour de fraisage (35) est prévu,
dans lequel,
la position d'au moins un point, ci-après dénommée "valeur de position", du pic (10) et/ou du porte-pic (70) est déterminée au moyen d'un procédé de mesure, une mesure absolue étant effectuée par rapport au point de rotation du tambour de fraisage (35) ou à une autre origine,
dans lequel ce résultat de mesure ou un calcul de ce résultat de mesure dans une unité de commutation est comparé à au moins une valeur de référence stockée dans une unité de mémoire,
et dans lequel
la comparaison de la valeur de position avec la valeur de référence est utilisée pour déterminer une variable de référence qui contient une déclaration quantitative sur l'usure de l'outil de fraisage.

2. Méthode selon la revendication 1,
**caractérisé**
**en ce qu'**un procédé de mesure sans contact, en particulier un procédé de mesure optique, est utilisé pour détecter la valeur de position.

3. Méthode selon l'une des revendications 1 ou 2,
**caractérisé**
**en ce que** la position de la pointe de pic (11) est détectée comme valeur de position, ou
**en ce que** la position de la pointe du pic (11) est détectée en tant que valeur de position, et
**en ce qu'**au moins un autre point du pic (10) qui n'est soumis qu'à une faible usure ou à aucune usure est déterminé comme valeur de position, et l'usure du pic est déterminée à partir de la différence entre ces deux valeurs de position.

4. Méthode selon l'une des revendications 1 à 3,
**caractérisé en ce que**
afin de déterminer la surface de la tête de pic ou une partie de la surface de la tête de pic, une pluralité de points ou le contour de la surface de pic ou une partie de la surface de la tête de pic sont détectés comme valeur de position, ou
**en ce que**, afin de déterminer la surface de la tête de pic ou une partie de la surface de la tête de pic, une pluralité de points ou le contour de la surface de la tête de pic ou une partie de la surface de la tête de pic sont détectés comme valeur de position, et
**en ce que** le volume de la tête de pic (12) ou d'une partie de la tête de pic (12), en particulier de la pointe de pic (11) ou d'une partie de la pointe de pic (11), est déterminé à partir de la valeur de position déterminée.

5. Méthode selon l'une des revendications 1 à 4,
**caractérisé**
**en ce que** l'état d'usure de la tête de pic (12) sans la pointe de pic (11) et isolé de la pointe de pic (11) seule est déterminé séparément au moyen d'une comparaison de valeurs mesurées.

6. Méthode selon l'une des revendications 1 à 5,
**caractérisé en ce que**
pour déterminer la valeur de référence, au moins un point du pic (10), du porte-pic et/ou du système de remplacement du porte-pic est déterminé dans l'état neuf non usé, et/ou
**en ce qu'**une valeur caractéristique de l'outil est stockée ou peut être stockée comme valeur de référence.

7. Méthode selon l'une des revendications 1 à 6,
**caractérisé**
**en ce que** la valeur de référence et/ou la valeur de position sont déterminées à l'état usé ou partiellement usé.

8. Méthode selon l'une des revendications 1 à 7,
**caractérisé**
**en ce qu'**une valeur caractéristique d'usure est corrélée à la valeur de position par l'intermédiaire d'un diagramme caractéristique ou d'une relation fonctionnelle en tant que valeur de référence.

9. Méthode selon l'une des revendications 1 à 8,
**caractérisé**
**en ce que** la position de l'axe longitudinal central (M1, M2) de la tête de pic (12) et/ou de la pointe de pic (11) est déterminée comme valeur de position, et
**en ce que** cette valeur de position est comparée à une valeur de référence contenant la position idéale de l'axe longitudinal central (M).

10. Méthode selon l'une des revendications 1 à 9,
**caractérisé**
**en ce que**, dans une autre étape de calcul, on détermine l'usure du pic (10) et, isolée de celle-ci, l'usure du porte-pic (70).

11. Méthode selon la revendication 10,
**caractérisé**
**en ce que** l'usure totale ajoutée à partir de l'usure du porte-pic (70) et du pic (10) est d'abord déterminée,
**en ce que** le pic (10) est ensuite échangé contre un pic (10) dans le nouvel état,
**en ce que** la position réelle d'au moins un point du pic monté (10) dans le nouvel état est alors déterminée,
**en ce que** ce résultat de mesure est ensuite comparé à une valeur de référence de cet au moins un point dans le nouvel état du pic (10) et du porte-pic (70), et l'usure du porte-pic (70) est déterminée en formant la différence.

12. Méthode selon la revendication 11,
**caractérisé**
**en ce que** l'usure du pic (10) est déterminée en calculant la différence entre l'usure totale et l'usure du support, ou bien
**en ce que** l'usure du pic (10) est déterminée en calculant la différence entre l'usure totale et l'usure du support, et
en ce sens que l'usure du support lors de la mesure précédente est utilisée pour former la différence.

13. Méthode selon l'une des revendications 1 à 10,
**caractérisé**
**en ce qu'**une première valeur de référence est déterminée dans le nouvel état de l'outil et du porte-outil, en ce qu'une deuxième valeur de référence est emportée, qui est actualisée après chaque changement d'outil au moyen d'une nouvelle mesure de référence, et en ce que l'usure du porte-outil est déterminée à partir des deux valeurs de référence, ou bien
**en ce qu'**une première valeur de référence est déterminée lorsque l'outil et le support sont dans le nouvel état, en ce qu'une deuxième valeur de référence est emportée, qui est actualisée après chaque changement d'outil au moyen d'une nouvelle mesure de référence, et en ce que l'usure du support est déterminée à partir des deux valeurs de référence, et
**en ce qu'**une valeur de position est déterminée sur un outil usé et l'usure totale est déterminée en formant la différence avec la première valeur de référence et l'usure de l'outil est déterminée en formant la différence avec la seconde valeur de référence.

14. Méthode selon l'une des revendications 1 à 10,
**caractérisé**
**en ce qu'**un premier point de référence à la pointe du pic et un second point de référence plus proche du support sont déterminés et, dans la suite du parcours, une première valeur de position à la pointe du pic et une seconde valeur de position au point plus proche du support d'un pic usé sont déterminées et l'usure totale est déterminée en formant la différence entre la première valeur de position et la première valeur de référence et l'usure du support est déterminée en formant la différence entre la seconde valeur de position et la seconde valeur de référence.

15. Méthode selon l'une des revendications 1 à 10,
**caractérisé**
**en ce que**, pour déterminer l'usure du porte pic (70), au moins un point du pic (10) qui n'est exposé qu'à une faible usure ou à aucune usure est déterminé comme valeur de position et est comparé à la valeur de référence de ce point dans l'état non usé ou partiellement usé.

16. Méthode selon l'une des revendications 1 à 15,
**caractérisé**
**en ce qu'**au moins un point d'une rainure d'extraction (13) de la tête de pic (12) est déterminé comme étant la position/valeur de référence.

17. Méthode selon l'une des revendications 1 à 16,
**caractérisé**
**en ce que** la valeur de position et/ou la valeur de référence est déterminée au moyen de la mesure du temps de parcours, du déphasage ou de la triangulation.

18. Méthode selon l'une des revendications 1 à 17,
**caractérisé**
**en ce que** la position de rotation d'un tambour de fraisage portant le pic (10), le porte-pic (70) et/ou le système de changement de porte-pic est déterminée, ou
**en ce que** la position de rotation d'un tambour de fraisage qui porte le pic (10), le porte-pic (70) et/ou le système de changement de porte-pic est déterminée, et
**en ce qu'**un angle de rotation du tambour de fraisage (35) est corrélé à la fois avec la valeur de référence et la valeur de position, et
en ce sens que l'état d'usure de l'outil de fraisage est déterminé à partir de la corrélation de ces angles de rotation.
